Europäisches Patentamt

European Patent Office

Office européen des brevets

(11) Veröffentlichungsnummer: **0 279 003 B1**

(12) **EUROPÄISCHE PATENTSCHRIFT**

(45) Veröffentlichungstag der Patentschrift: **02.01.92**

(51) Int. Cl.5: **B01D 53/34**

(21) Anmeldenummer: **87102258.8**

(22) Anmeldetag: **17.02.87**

Die Akte enthält technische Angaben, die nach dem Eingang der Anmeldung eingereicht wurden und die nicht in dieser Patentschrift enthalten sind.

(54) **Verfahren zur Rauch- und Abgasreinigung mittels Nassverfahren.**

(43) Veröffentlichungstag der Anmeldung:
**24.08.88 Patentblatt 88/34**

(45) Bekanntmachung des Hinweises auf die Patenterteilung:
**02.01.92 Patentblatt 92/01**

(84) Benannte Vertragsstaaten:
**AT BE CH DE ES FR GB IT LI NL SE**

(56) Entgegenhaltungen:
**EP-A- 0 137 260**
**EP-A- 0 138 781**
**EP-A- 0 151 398**
**WO-A-82/02151**

(73) Patentinhaber: **Küppenbender, Herbert**
**Lenzhahner Weg 36**
**W-6272 Niedernhausen(DE)**

Patentinhaber: **Reis, Helmut**
**Köhlersweg 15**
**W-8751 Hofstetten(DE)**

(72) Erfinder: **Küppenbender, Herbert**
**Lenzhahner Weg 36**
**W-6272 Niedernhausen(DE)**
Erfinder: **Reis, Helmut**
**Köhlersweg 15**
**W-8751 Hofstetten(DE)**

(74) Vertreter: **Bartsch, Elisabeth, Dr.**
**Patentanwälte Lotterhos & Partner Lichtensteinstrasse 3**
**W-6000 Frankfurt am Main 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Reinigung von Schwefeldioxid und/oder Stickoxide enthaltenden Rauch- und Abgasen, die noch weitere Verunreinigungen enthalten können, durch Naßabsorption.

Zur Beseitigung von Schwefeldioxid aus Rauch- bzw. Abgasen werden gewöhnlich die Kalkwaschverfahren benutzt, bei denen das Rauchgas mit einer wäßrigen Suspension oder Lösung von gelöschtem Kalk in Kontakt gebracht und der Schwefeldioxid in Gips übergeführt wird.

Zur Beseitigung der Stickoxide aus Abgasen, die außerdem noch Schwefeldioxid enthalten können, ist bereits vorgeschlagen worden, die Abgase mit Ammoniak in der Gasphase im Temperaturbereich von 100 bis 500˚C in Gegenwart eines speziellen Metalloxidkatalysators (DE-B- 24 11 888) oder Molekularsiebs (Steuler-Verfahren) als Katalysator zu behandeln, wobei die Stickoxide unter Bildung von Stickstoff und Wasser reduziert werden. Der Nachteil dieses Verfahrens besteht darin, daß die Katalysatoren gewöhnlich kostspielig sind und nur eine begrenzte Lebensdauer haben.

Bei dem Walther-Verfahren werden Schwefeldioxid und Stickoxide aus dem Abgas simultan in einem Naßverfahren unter Einsatz von Ammoniak entfernt, wobei zwischen die Stufe der Schwefeldioxidentfernung und die der Stickoxidentfernung eine Ozonbehandlung eingeschaltet werden muß. Bei diesem Verfahren werden als Endprodukte Ammoniumsulfat und Ammoniumnitrat erhalten.

Es wurde gefunden, daß man Schwefeldioxid, Stickoxide, Schwefelwasserstoff, Schwefelkohlenstoff, organische Schwefelverbindungen und/oder Kohlenwasserstoffe aus Rauch- und Abgasen, die noch weitere gasförmige Schadstoffe enthalten können, in einem überraschend einfach durchführbaren Naßverfahren entfernen kann, wenn man die Rauch- und Abgase
zunächst durch eine in einem Reaktor befindliche, 40 - 95˚C, vorzugsweise 90 - 95˚C heiße, wäßrige Salpetersäurelösung, die Schwefelsäure, Phosphorsäure und/oder Lewissäuren enthält, unter guter Durchmischung hindurchleitet, und
dann die aus dem Säurereaktor austretende Gas-Dampf-Mischung einer Teilkondensation bei einer Temperatur im Bereich von unterhalb von 40 bis 90˚C, vorzugsweise von 80 bis 90˚C, unterwirft, wobei das so erhaltene Kondensat in den Reaktor zurückgeleitet wird, während die so erhaltenen Rauch- und Abgase in die Luft abgeleitet werden. Das so erhaltene Abgas ist praktisch frei von Schadstoffen.

Das Reinigungsverfahren der Erfindung ist auf Rauch- bzw. Abgase verschiedener Herkunft, z.B. solchen, die von Kohlekraftwerken, Müllverbrennungsanlagen, Altölverbrennungsanlagen, Heizungsanlagen, Brennkraftmaschinen (Autos) etc. stammen, anwendbar, da mit dem Verfahren der Erfindung nicht nur die Stickoxide und das Schwefeldioxid, sondern auch weitere Schadstoffe, wie Schwefelwasserstoff, Schwefelkohlenstoff, organische Schwefelverbindungen, Kohlenmonoxid, Kohlenwasserstoffe etc., entfernt werden können.

Bei der Durchführung des Verfahrens der Erfindung wird zweckmäßig in der Weise vorgegangen, daß das gewöhnlich heiße Rauch- oder Abgas - gegebenenfalls nach Befreiung von Staub- und Rußteilchen durch ein Filter - und nach Abkühlen auf eine Temperatur unterhalb von 150˚C, vorzugsweise auf 100 bis 140˚C, - zweckmäßig durch Beimischen von Luft oder Stickstoff - durch eine in einem Reaktor befindliche wäßrige Salpetersäurelösung, die Schwefelsäure, Phosphorsäure und/oder Lewissäuren enthält, hindurchgeleitet wird.

Die Temperatur der Salpetersäurelösung im Reaktor kann im Bereich von etwa 40 bis etwa 95˚C schwanken, wobei dem Bereich von etwa 90 bis etwa 95˚C der Vorzug gegeben wird. Die Wahl der Temperatur der Salpetersäurelösung hängt von den Schadstoffen in dem zu reinigenden Abgas bzw. davon ab, bei welchen Temperaturen die jeweiligen Schadstoffe mit der Salpetersäurelösung reagieren. Wenn auch die meisten Schadstoffe der Abgase im Temperaturbereich von etwa 90 bis 95˚C mit der Säure lösung voll in Reaktion treten, so gibt es doch auch Schadstoffe, wie Schwefelkohlenstoff, organische Schwefelverbindungen, die bereits im Temperaturbereich von etwa 40˚C mit der Säurelösung reagieren und sich auf diese Weise vollständig aus dem Abgas entfernen lassen.

Um eine gute Vermischung von Abgas mit Reaktorflüssigkeit zu erzielen, wird das Abgas vorzugsweise in den unteren Teil des Reaktors eingeführt, der zweckmäßig mit Einrichtungen, wie Füllkörper tragende Verteilerböden, Siebböden, Düsen-, Ventil-, Flockungsböden, ausgestattet ist, die die bereits mit dem Einleiten des Abgases in die Reaktorflüssigkeit erzielte Vermischung noch verstärken.

Wenn die Temperatur des Abgases hoch genug ist, reicht die mit dem Abgas in den Reaktor eingebrachte Wärmeenergie aus, um die Reaktorflüssigkeit auf der Reaktionstemperatur im Bereich von 40 bis 95˚C zu halten.

Die Anfangskonzentration an den verschiedenen Säuren in der Reaktorflüssigkeit ist nicht kritisch. Sie kann 0,5 Gew.% Salpetersäure und 1,5 Gew.% Schwefelsäure, Phosphorsäure und/oder Lewissäuren betragen. Da die Säuren unter den Reaktionsbedingungen aus den in den Abgasen enthaltenen Oxiden in situ gebildet werden, pendelt sich während des Verfahrens das Verhältnis zwischen den einzelnen Säuren auf einen bestimmten Wert ein, der von den Reaktionsbedingungen, wie der Temperatur der Reaktorflüssigkeit, abhängig ist. Als vorteilhaft hat sich eine Anfangskonzentration von etwa 10 Gew.% Salpetersäure und etwa 20 Gew.% Schwefelsäure erwiesen, die teilweise oder ganz durch Phosphorsäure und/oder Lewissäuren ersetzt werden kann, wobei den Mineralsäuren der Vorzug gegeben wird.

Die aus dem Reaktor austretende Gas-Dampf-Mischung wird in einem dem Reaktor unmittelbar nachgeordneten Partialkondensator bei einer Temperatur im Bereich von unterhalb von 40 bis 90°C, vorzugsweise von 80 bis 90°C, der Teilkondensation unterworfen, wobei das erhaltene Kondensat - im wesentlichen Wasser und Dünnsäuren - in den Reaktor zurückgeleitet wird, und die so erhaltenen gereinigten Rauch- und Abgase - gegebenenfalls nach Durchgang durch einen Kondensator - in die Luft abgeleitet werden.

Als Partialkondensator wird vorzugsweise ein Dephlegmator verwendet. Durch die Rückführung des bei der Partialkondensation erhaltenen Kondensats in den Reaktor werden die Flüssigkeitsverluste während der Reaktion etwa ausgeglichen. Das Verfahren arbeitet damit kontinuierlich.

Mit der Verfahrensvariante, die Rauch- und Abgase nach Durchgang durch den Partialkondensator und vor der Ableitung in die Luft noch einer weiteren Kondensation zu unterwerfen, kann eine weitere Reinigung der Rauch- und Abgase erreicht werden. Die Kondensation wird zweckmäßig bei einer Temperatur unterhalb der der Partialkondensation durchgeführt. Das heißt, die Temperatur dieser weiteren Kondensation liegt unterhalb von 40°C bei einer Partialkondensation im Bereich von 40 bis 90°C, und sie liegt unterhalb von 80°C, bei einer Partialkondensation im Bereich von 80 bis 90°C. Die Zusammensetzung des auf diese Weise von den Abgasen abgetrennten Kondensats ist nicht bekannt. Das Kondensat ist wasserlöslich, leicht flüchtig und hat sich als ungiftig erwiesen.

Die aus dem Partialkondensator oder aus dem Kondensator in die Atmosphäre austretenden Abgase enthalten praktisch keine Schadstoffe mehr.

In den Abgasen gegebenenfalls enthaltene Metalloxide, wie Bleioxid, werden im Reaktor in die entsprechenden Metallsulfate, wie Bleisulfat, übergeführt, das von Zeit zu Zeit aus der Reaktorflüssigkeit ausgeschleust wird.

Das Verfahren der Erfindung soll durch folgende Beispiele näher erläutert werden.

Beispiel 1

Ein aus einem Otto-Motor stammender Abgasstrom mit einem Gehalt an
11000 ppm    CH-Verbindungen,
4000 ppm    $NO_x$ und
2 Vol.%    CO
wurde im Verhältnis 1 : 1 mit Luft vermischt. Der so erhaltene Mischgasstrom, der eine Temperatur von 140°C aufwies, wurde eine Stunde mit einer Geschwindigkeit von 200 l/h zunächst durch einen Reaktor mit 300 ml einer siedenden wäßrigen Lösung von 90 bis 95°C, die
10 Gew.% Salpetersäure,
20 Gew.% Schwefelsäure und
70 Gew.% Wasser
enthielt, und dann durch einen dem Reaktor unmittelbar nachgeordneten Dephlegmator, der im Temperaturbereich von 80 bis 90°C gehalten wurde, geleitet, um das im wesentlichen aus Wasser und Dünnsäuren bestehende Kondensat abzuscheiden und in den Reaktor zurückzuführen.

Nach dem Verlassen des Dephlegmators wurde der Abgasstrom in einem Kondensator auf eine Temperatur unterhalb von 80°C abgekühlt, wobei sich ein flüssiges, leicht flüchtiges Kondensat bildete, das entfernt wurde.

Der gereinigtr Abgasstrom enthielt
~0,1 ppm    CH-Verbindungen,
2,0 ppm    $NO_x$ und
1,0 ppm    CO.
In der Reaktorlösung fiel Bleisulfat aus.

Beispiel 2

Ein von der Ölverbrennung stammendes Rauchgas, das
0,5 Vol.%    CH-Verbindungen,
1000 ppm    $NO_x$,
200 ppm    CO,
8 Vol.%    $O_2$ und
2700 ppm    $SO_2$
enthielt und eine Temperatur von 150°C aufwies, wurde zwei Stunden mit einer Geschwindigkeit von 500 l/h durch einen Reaktor mit 250 ml einer siedenden wäßrigen Lösung von etwa 90 bis 95°C geleitet, die
10 Gew.% Salpetersäure,
20 Gew.% Schwefelsäure und
70 Gew.% Wasser
enthielt. Die weitere Aufarbeitung erfolgte in der in Beispiel 1 angegebenen Weise, wobei jedoch die Kondensatorstufe weggelassen wurde.

Der nach dem Verlassen des Dephlegmators erhaltene gereinigte Abgasstrom enthielt
0,0 ppm    CH-Verbindungen,
2,5 ppm    $NO_x$,
0,0 ppm    CO,
9,3 Vol.%    $O_2$ und
0,0 ppm    $SO_2$

Beispiel 3

Ein Schwefelwasserstoff enthaltendes Abgas, das

1000 ppm H₂S,
21 Vol.% O₂ und
78 Vol.% N₂

enthielt und eine Temperatur von 20°C aufwies, wurde eine Stunde mit einer Geschwindigkeit von 550 l/h durch einen Reaktor mit 250 ml einer siedenden wäßrigen Lösung von 90 bis 95°C geleitet, die

10 Gew.% Salpetersäure,
20 Gew.% Schwefelsäure und
70 Gew.% Wasser

enthielt. Die weitere Aufarbeitung erfolgte in der in Beispiel 2 angegebenen Weise.
Der so gereinigte Abgasstrom enthielt

1 ppm H₂S und
21,2 Vol.% O₂.

Beispiel 4

Ein Schwefeldioxid enthaltender Stickstoffstrom, der

2700 ppm SO₂ und
0,0 Vol.% O₂

enthielt und eine Temperatur von 20°C aufwies, wurde fünf Stunden mit einer Geschwindigkeit von 500 l/h durch einen Reaktor mit 250 ml einer siedenden wäßrigen Lösung von 90 bis 95°C geleitet, die

10 Gew.% Salpetersäure,
20 Gew.% Schwefelsäure und
70 Gew.% Wasser

enthielt. Die weitere Aufarbeitung erfolgte in der in Beispiel 2 angegebenen Weise.
Der so erhaltene gereinigte Abgasstrom enthielt

0 ppm SO₂ und
0,3 Vol.% O₂.

**Patentansprüche**

1. Verfahren zur Rauch- und Abgasreinigung mittels Naßverfahren, dadurch gekennzeichnet, daß man die Schwefeldioxid, Stickoxide, Schwefelwasserstoff, Schwefelkohlenstoff, organische Schwefelverbindungen und/oder Kohlenwasserstoffe enthaltenden Rauch- und Abgase, die noch weitere gasförmige Schadstoffe enthalten können, zunächst durch eine in einem Reaktor befindliche etwa 40 - 95°C, vorzugsweise etwa 90 - 95°C, heiße, wäßrige Salpetersäurelösung, die Schwefelsäure, Phosphorsäure und/oder Lewissäuren enthält, unter guter Durchmischung hindurchleitet, und dann die aus dem Säurereaktor austretende Gas-Dampf-Mischung einer Teilkondensation im Temperaturbereich von unterhalb von 40 - 90°C, vorzugsweise von 80 - 90°C, unterwirft, wobei das erhaltene Kondensat in den Reaktor zurückgeleitet wird, und die so erhaltenen Rauch- und Abgase in die Luft abgeleitet werden.

2. Verfahren nach Anspruch 1, dadurch gekennzeichnet, daß man die nach dem Durchgang durch den Partialkondensator erhaltenen Rauch-und Abgase vor der Ableitung in die Luft einer Kondensation bei einer Temperatur unterhalb von 40°C, vorzugsweise unterhalb von 80°C, unterwirft und das erhaltene Kondensat abtrennt.

3. Verfahren nach Anspruch 1, dadurch gekennzeichnet, daß man die zu reinigenden Rauch- und Abgase vor Eintritt in den Reaktor von Feststoffen befreit.

4. Verfahren nach Anspruch 1, dadurch gekennzeichnet, daß man die heißen Rauch- und Abgase vor Eintritt in den Reaktor durch Beimischung von Luft oder Stickstoff auf eine Temperatur unterhalb von 150°C, vorzugsweise von 100 bis 140°C, herunterkühlt.

5. Verfahren nach Anspruch 1, dadurch gekennzeichnet, daß man eine Salpetersäurelösung verwendet, deren Anfangskonzentration an Salpetersäure etwa 0,5, vorzugsweise etwa 10 Gew.%, und an Schwefelsäure, Phosphorsäure und/oder Lewissäuren etwa 1,5, vorzugsweise etwa 20 Gew.%, beträgt.

6. Verfahren nach Anspruch 1, dadurch gekennzeichnet, daß man die Rauch- und Abgase in den unteren Teil eines Reaktors einführt, der mit Einrichtungen ausgestattet ist, die eine gute Verteilung der Rauch- und Abgase in der sauren Reaktorlösung gewährleisten.

7. Verfahren nach Anspruch 1, dadurch gekennzeichnet, daß man die Teilkondensation der aus dem Reaktor austretenden Gas-Dampf-Mischung in einem, dem Säure enthaltenden Reaktor unmittelbar nachgeordneten Partialkondensator durchführt.

8. Verfahren nach Anspruch 7, dadurch gekennzeichnet, daß als Partialkondensator ein Dephlegmator verwendet wird.

**Claims**

1. A process for the purification of flue- and waste gases by a wet processing method, characterised in that the flue- and waste gases, which contain sulphur dioxide, nitrogen oxides, hydrogen sulphide, carbon disulphide, organic sulphur compounds and/or hydrocarbons and which can additionally contain further gaseous pollutants, are firstly conducted through an aqueous nitric acid solution contained in a reactor at a temperature of approximately 40 - 95° C, preferably approximately 90 - 95° C, and comprising sulphuric acid, phosphoric acid and/or Lewis acids, with thorough mixing, whereupon the gas-vapour mixture output from the acid reactor is subjected to partial condensation in a temperature range of less than 40 - 90° C, preferably 80 - 90° C, the obtained condensate being returned to the reactor and the flue- and waste gases thus obtained being discharged into the atmosphere.

2. A process as claimed in Claim 1, characterised in that before they are discharged into the atmosphere, the flue- and waste gases obtained following passage through the partial condenser are subjected to condensation at a temperature of less than 40° C, preferably less than 80° C, and the obtained condensate is separated.

3. A process as claimed in Claim 1, characterised in that the flue- and waste gases which are to be purified are freed of solids before they enter the reactor.

4. A process as claimed in Claim 1, characterised in that before they enter the reactor, the hot flue- and waste gases are cooled to a temperature of below 150° C, preferably of 100 to 140° C, by the admixing of air or nitrogen.

5. A process as claimed in Claim 1, characterised in that a nitric acid solution is used, the initial nitric acid concentration of which amounts to approximately 0.5, preferably approximately 10% by weight, and the initial sulphuric acid, phosphoric acid and/or Lewis acids concentration of which amounts to approximately 1.5 and preferably approximately 20% by weight.

6. A process as claimed in Claim 1, characterised in that the flue- and waste gases are introduced into the lower part of a reactor which is equipped with devices which ensure a good distribution of the flue- and waste gases in the acid reactor solution.

7. A process as claimed in Claim 1, characterised in that the partial condensation of the gas-vapour mixture output from the reactor is carried out in a partial condenser arranged directly downstream of the reactor which contains the acid.

8. A process as claimed in Claim 7, characterised in that a deflegmator is used as partial condenser.

## Revendications

1. Procédé de purification des fumées et des gaz d'échappement par un procédé humide, caractérisé en ce qu'on élimine le dioxyde de soufre, les oxydes d'azote, l'hydrogène sulfuré, le sulfure de carbone, des composés soufrés organiques et/ou des hydrocarbures de fumées ou de gaz résiduaires, qui peuvent contenir encore d'autres polluants gazeux, en faisant passer les fumées et gaz résiduaires dans une solution aqueuse d'acide nitrique très chaude, 40 - 95° C, de préférence 90 - 95° C se trouvant dans un réacteur, qui contient de l'acide sulfurique, de l'acide phosphorique et/ou des acides de Lewis, avec une bonne agitation et ensuite on soumet le mélange gaz-vapeur sortant du réacteur acide à une condensation partielle à une température comprise entre moins de 40° C et 90° C, de préférence entre 80 et 90° C, puis on recycle le condensat obtenu dans le réacteur, tandis qu'on peut laisser échapper la fumée et les gaz résiduaires ainsi obtenus dans l'air.

2. Procédé selon la revendication 1, caractérisé en ce qu'on soumet les fumées et gaz résiduaires obtenus, après la traversée dans un condenseur partiel, avant de les relâcher dans l'air, à une condensation à une température inférieure à 40° C, de préférence inférieure à 80° C et on sépare le condensat obtenu.

3. Procédé selon la revendication 1, caractérisé en ce qu'on retient les solides présents dans les fumées et gaz résiduaires avant l'entrée dans le réacteur.

4. Procédé selon la revendication 1, caractérisé en ce qu'on refroidit les fumées et gaz résiduaires très chauds avant l'entrée dans le réacteur par mélange avec de l'air ou de l'azote à une température inférieure à 150° C, de préférence de 100 à 140° C.

5. Procédé selon la revendication 1, caractérisé en ce qu'on utilise une solution d'acide nitrique, dont la concentration de départ en acide nitrique est d'environ 0,15, de préférence environ 10% en poids, et celle en acide sulfurique, acide phosphorique et/ou acide de Lewis est d'environ 1,5, de préférence 20% en poids.

6. Procédé selon la revendication 1, caractérisé en ce qu'on introduit les fumées et gaz résiduaires dans la partie inférieure d'un réacteur, qui comprend des dispositifs qui permettent une bonne répartition des fumées et gaz résiduaires dans la solution acide du réacteur.

7. Procédé selon la revendication 1, caractérisé en ce qu'on réalise la condensation partielle du mélange gaz-vapeur dans un condenseur partiel placé directement après le réacteur contenant l'acide.

8. Procédé selon la revendication 7, caractérisé en ce qu'on utilise un déphlegmateur comme condenseur partiel.